Europäisches Patentamt

European Patent Office

Office européen des brevets

(11) Veröffentlichungsnummer: **0 248 324**
**A2**

(12) **EUROPÄISCHE PATENTANMELDUNG**

(21) Anmeldenummer: **87107616.2**

(22) Anmeldetag: **25.05.87**

(51) Int. Cl.⁴: **H01B 7/00** , **H01C 17/24**

(30) Priorität: **04.06.86 DE 3618754**

(43) Veröffentlichungstag der Anmeldung:
**09.12.87 Patentblatt 87/50**

(84) Benannte Vertragsstaaten:
**AT BE CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Streble, Bernd, Dipl.-Ing.**
**Schlernweg 11**
**D-8904 Friedberg(DE)**

(54) **Leitung mit einstellbarem Widerstand.**

(57) Leitung (2) mit einstellbarem Widerstand (3), die einen stromleitenden Kerndraht (4) und mindestens eine den Kerndraht (4) umgebende, am Umfang des Kerndrahtes (4) anliegende stromleitende Mantelschicht (5) aufweist, durch deren teilweises Entfernen der Widerstand (3) der Leitung (2) einstellbar ist.

FIG 3

EP 0 248 324 A2

## Leitung mit einstellbarem Widerstand

Die Erfindung bezieht sich auf eine Leitung mit einstellbarem Widerstand mit den im Oberbegriff des Hauptanspruchs angegebenen Merkmalen.

Eine derartige Leitung mit mindestens einer den Kerndraht umgebenden Mantelschicht ist bereits bekannt, wobei die Mantelschicht der Leitung eine nichtleitende Isolierschicht ist, die eine unbeabsichtigte Berührung oder Kontaktierung des Kerndrahtes mit anderen Bauteilen verhindert. Der Widerstand der Leitung wird beispielsweise durch ein in der Leitung angeordnetes, einstellbares Potentiometer, durch einen in der Leitung angeordneten Festwiderstand oder bei Wechselströmen durch in der Leitung angeordnete Induktivitäten oder Kapazitäten gebildet. Insbesondere in seriell - schnellen Datenübertragungsstrecken werden Datenempfänger über Stichleitungen an die jeweilige Datenübertragungsstrecke angeschlossen, die einen von der Leitungslänge abhängigen kapazitiven Widerstand aufweist. Dieser ist bei längeren Leitungen durch einen an die Kapazität angepaßten zusätzlichen Widerstand auszugleichen, um Störungen in der Datenübertragung zu vermeiden. Nachteilig ist dabei, daß der zum Ausgleich erforderliche zusätzliche Widerstand einen entsprechenden Bauraum und unter Umständen eine Schaltungsänderung von Platinen oder Flachbaugruppen erfordert.

Aufgabe der Erfindung ist es, eine Leitung mit einstellbarem Widerstand nach dem Oberbegriff des Hauptanspruchs anzugeben, die einen geringen Bauraum und bei der Einstellung keine Veränderung der Leitungslänge und keine zusätzlichen Bauelemente erfordert.

Diese Aufgabe ist dadurch gelöst, daß die Mantelschicht stromleitend und der Widerstand der Leitung durch teilweises Entfernen der Mantelschicht einstellbar ist. Besonders vorteilhaft ist dabei, daß eine Widerstandserhöhung der Leitung leicht durch teilweises Entfernen der Mantelschicht ohne Auftrennung der Leitung möglich ist. Dadurch ist kein zusätzlicher Bauraum für einen üblicherweise verwendeten Kompensationswiderstand erforderlich, der nach der Leitungsauftrennung mit den Leitungsenden zu verbinden ist.

Vorteilhafte Ausgestaltungen der Erfindung sind Gegenstand von Unteransprüchen.

Ein Ausführungsbeispiel der Erfindung wird anhand mehrerer Zeichnungen näher erläutert. Es zeigen:

FIG 1 eine Prinzipdarstellung einer Datenübertragungseinrichtung mit einem Datensender und einem Datenempfänger, der über eine Leitung mit einstellbarem Widerstand an die Stammleitung der Datenübertragungseinrichtung angeschlossen ist,

FIG 2 einen Querschnitt der Leitung nach FIG 1 und

FIG 3 eine Seitenansicht der Leitung nach FIG 2, die durch Abmantelung einen erhöhten Widerstand aufweist.

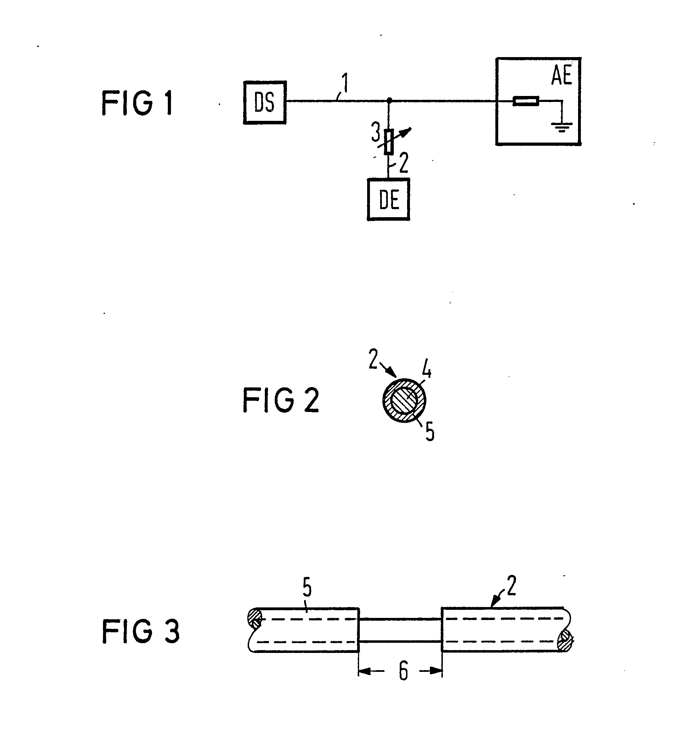

Die in FIG 1 im Prinzip dargestellte Datenübertragungseinrichtung weist einen Datensender DS mit einer über eine Abschlußeinrichtung AE geerdeten Stammleitung 1 und einen über eine Leitung 2 mit einstellbarem Widerstand 3 an die Stammleitung 1 angeschlossenen Datenempfänger DE auf. Bei derartigen Datenübertragungsstrecken ist die Leitung 2 möglichst kurz zu halten, da sonst die Leitung 2 eine höhere Kapazität aufweist, die Störungen bei der Datenübertragung verursachen kann. Wenn der Datenempfänger DE nach der Verlegung der Stammleitung 1 an einen anderen Ort verlegt wird, so daß der Datenempfänger DE eine längere Leitung 2 zur Stammleitung 1 aufweist, kann der dadurch erhöhte kapazitive Anteil des Leitungswiderstandes durch einen einstellbaren Widerstand 3 der Leitung 2 weitgehend ausgeglichen werden.

Hierzu weist die in FIG 2 im Querschnitt dargestellte Leitung 2 einen stromleitenden Kerndraht 4 und eine den Kerndraht 4 umgebende, am Umfang des Kerndrahtes 4 anliegende stromleitende Mantelschicht 5 auf. Bei dem Ausführungsbeispiel ist der Widerstandswert des Kerndrahtes 4 höher als der Widerstandswert der Mantelschicht 5. Selbstverständlich könnte der Widerstandswert des Kerndrahtes 4 auch einen kleineren Widerstandswert als die Mantelschicht 5 aufweisen. Der Kerndraht 4 der Leitung 2 ist bei dem Ausführungsbeispiel aus einem Widerstandsmaterial gebildet, während die Mantelschicht 5 aus Kupfer besteht. Der Kerndraht 4 und die Mantelschicht 5 könnte aber auch aus einem anderen Material gebildet sein. Um eine wesentliche Erhöhung des Widerstandes der Leitung 2 bereits beim Entfernen der Mantelschicht 5 über einen verhältnismäßig kurzen Längenbereich zu ermöglichen, kann die Mantelschicht 5 aber auch aus Silber bzw. Gold oder aus deren Legierungen, beispielsweise in Verbindung mit Kupfer, bestehen.

Der in FIG 1 symbolhaft dargestellte Widerstand 3 wird gemäß FIG 3 durch Entfernen der Mantelschicht 5 über einen entsprechenden Längenbereich 6 der Leitung 2 gebildet. Dieser Widerstand kann durch Vergrößerung des Längenbereiches 6 bei ausreichend langer Leitung 2 ohne Leitungsverlängerung so bemessen werden, daß der kapazitive Anteil des Leitungswiderstandes durch diesen Widerstand für eine bestimmte Sendefrequenz vollständig ausgeglichen wird. Die Mantelschicht 5 kann dabei durch Sandstrahlen, Abschälen, Ätzen oder aber durch Erwärmung der Mantelschicht 5, beispielsweise durch Laserstrahlen, entfernt werden. Die Mantelschicht 5 kann aber auch durch ein anderes Werkzeug entfernt werden.

Eine derartige Leitung mit einstellbarem Widerstand ist vielseitig zu verwenden und kann beispielsweise an seiner Mantelschicht mit Leiterbahnen einer Leiterplatte verbunden sein. Bei dem Ausführungsbeispiel ist der Kerndraht von einer einzigen Mantelschicht umgeben. Ebenso könnten aber auch mehrere radial übereinander angeordnete Mantelschichten vorgesehen sein, die in stromleitender Verbindung stehen und eine Einstellung des Leitungswiderstandes durch Vergrößerung des Längenbereiches der Abmantelung und durch - schichtweisen radialen Abtrag der Mantelschichten ermöglichen.

Bezugszeichenliste

DS Datensender
DE Datenempfänger
AE Abschlußeinrichtung
   1 Stammleitung
   2 Leitung
   3 Einstellbarer Widerstand
   4 Kerndraht
   5 Stromleitende Mantelschicht
   6 Längenbereich

**Ansprüche**

1. Leitung mit einstellbarem Widerstand, die einen stromleitenden Kerndraht und mindestens eine den Kerndraht umgebende, am Umfang des Kerndrahtes anliegende Mantelschicht aufweist, **gekennzeichnet** durch mindestens eine stromleitende Mantelschicht, durch deren teilweises Entfernen der Widerstand der Leitung einstellbar ist.

2. Leitung mit einstellbarem Widerstand nach Anspruch 1, **dadurch gekennzeichnet**, daß der Kerndraht gegenüber der Mantelschicht einen höheren Widerstandswert aufweist.

3. Leitung mit einstellbarem Widerstand nach Anspruch 2, **dadurch gekennzeichnet**, daß der Kerndraht aus einem Widerstandsmaterial besteht.

4. Leitung mit einstellbarem Widerstand nach Anspruch 1, **dadurch gekennzeichnet**, daß die Mantelschicht aus Kupfer, Silber, Gold oder aus deren Legierungen besteht.

5. Leitung mit einstellbarem Widerstand nach Anspruch 1, **dadurch gekennzeichnet**, daß die Mantelschicht durch Sandstrahlen, Abschälen, Ätzen oder durch Erwärmung entfernt wird.

6. Leitung mit einstellbarem Widerstand nach Anspruch 1, **dadurch gekennzeichnet**, daß die Leitung an ihrer Mantelschicht mit Leiterbahnen einer Leiterplatte verbunden ist.

7. Leitung mit einstellbarem Widerstand nach Anspruch 1, **dadurch gekennzeichnet**, daß die Leitung eine Datenleitung einer Datenübertragungsanlage mit einem Datenempfänger verbindet.

0 248 324

FIG 1

DS —— 1 ——·—— AE
3 ▯
2
DE

FIG 2

2 → ⬤ ← 4
5

FIG 3

5 —— ⬚⬚⬚ —— 2
|← 6 →|